# EUROPÄISCHE PATENTSCHRIFT

(11) **EP 3 771 009 B1**
(45) Veröffentlichungstag und Bekanntmachung des Hinweises auf die Patenterteilung: **13.12.2023**
(21) Anmeldenummer: 20185151.6
(22) Anmeldetag: 10.07.2020
(51) Int. Cl.: H01M 8/04119, H01M 8/0662, H01M 8/04791, H01M 8/04746, H01M 8/0438, H01M 8/0444, H01M 8/04313, H01M 8/1018

(54) **VERFAHREN UND VORRICHTUNG ZUM REINIGEN EINER BRENNSTOFFZELLENKOMPONENTE MITTELS DRUCKLUFT, SOWIE SCHIENENFAHRZEUG**
METHOD AND DEVICE FOR CLEANING A FUEL CELL COMPONENT BY MEANS OF COMPRESSED AIR, AND RAIL VEHICLE
PROCÉDÉ ET DISPOSITIF POUR RINCER UN COMPOSANT D'UNE PILE À COMBUSTIBLE, ET VÉHICULE FERROVIAIRE

(30) Priorität: 26.07.2019 DE 102019211171
(43) Veröffentlichungstag der Anmeldung: 27.01.2021
(73) Patentinhaber: Siemens Mobility GmbH, 81739 München (DE)
(72) Erfinder: Antrack, Markus, 01589 Riesa (DE); Peymandar, De-Niang Maria, 91468 Gutenstetten (DE)
(74) Vertreter: Siemens Patent Attorneys

(56) Entgegenhaltungen:
- DE-A1- 10 230 283
- DE-A1-102009 043 569
- DE-A1-102017 214 966
- US-A1- 2017 200 959

## Beschreibung

Die vorliegende Erfindung betrifft ein Verfahren und eine Vorrichtung zum Betreiben einer Brennstoffzelleneinheit für ein Schienenfahrzeug. Die vorliegende Erfindung betrifft ferner ein korrespondierendes Schienenfahrzeug mit einer solchen Vorrichtung.

Ein Brennstoffzellensystem kann als Antriebsquelle für ein Schienenfahrzeug dienen. Darin wird zum Beispiel Wasserstoff als Betriebsmittel mit in einem Luftstrom befindlichen Sauerstoff oxidiert, um elektrische Antriebsenergie für das Schienenfahrzeug bereitzustellen. Dabei ist es eine Herausforderung, die Lebensdauer der Komponenten eines Brennstoffzellensystems zu verlängern und einen kostengünstigen Betrieb eines Brennstoffzellensystems zu ermöglichen.

Aus der Offenlegungsschrift DE 102 30 283 A1 ist ein Verfahren und Anordnung zum Reinigen der einer Brennstoffzelle für den Betrieb zuzuführenden Gase von Bestandteilen, die für den Brennstoffzellenbetrieb ungünstig sind, mittels eines in einem Zuleitungskanal angeordneten Filtersystems bekannt. Aus der Offenlegungsschrift DE 10 2009 043569 A1 ist ein Verfahren zum Betreiben eines Brennstoffzellensystem bekannt, bei welchem das Brennstoffzellensystem während einer Abschaltprozedur mit Luft aus einer zuluftseitigen Luftfördereinrichtung gespült wird. Aus der Offenlegungsschrift DE 102 30 283 A1 ist ein Verfahren zum Betreiben eines Befeuchtungssystems für ein Brennstoffzellensystem für ein Kraftfahrzeug bekannt, bei welchem ein Gehalt an flüssigem Wasser in einem Befeuchter durch Messung eines Leckagestroms bestimmt wird. Schließlich ist aus dem Dokument US 2017/0200959 A1 ein Verfahren sowie ein System zur Verhinderung eines Rückstromverfalls in einer Brennstoffzelle bekannt.

Es ist eine Aufgabe, die der Erfindung zugrunde liegt, ein Verfahren und eine Vorrichtung zum Betreiben einer Brennstoffzelleneinheit für ein Schienenfahrzeug bereitzustellen, die jeweils einen effizienten und kostengünstigen Betrieb eines Brennstoffzellensystems ermöglichen. Es ist ferner eine Aufgabe, ein Schienenfahrzeug mit einer solchen Vorrichtung bereitzustellen.

Die Aufgabe wird durch ein Verfahren bzw. eine Vorrichtung mit den Merkmalen der betreffenden unabhängigen Patentansprüche gelöst. Ausgestaltungen und Weiterbildungen des Verfahrens bzw. der Vorrichtung sind in den jeweiligen abhängigen Patentansprüchen angegeben.

Gemäß einem Aspekt umfasst ein Verfahren zum Betreiben einer Brennstoffzelleneinheit für ein Schienenfahrzeug ein Bereitstellen eines komprimierten Luftstroms und ein Bereitstellen einer Variablen. Das Verfahren umfasst weiter ein Zuführen des komprimierten Luftstroms durch eine Zuluftleitung in eine Brennstoffzellenkomponente der Brennstoffzelleneinheit und dadurch Reinigen der Brennstoffzellenkomponente mittels des komprimierten Luftstroms in Abhängigkeit von der Variablen.

Mittels des beschriebenen Verfahrens ist auf einfache und kostengünstige Weise eine Zwischenreinigung einer Brennstoffzellenkomponente einer Brennstoffzelleneinheit mittels Druckluft möglich. Ein solches Durchspülen mit Druckluft kann eine verschmutzte Brennstoffzellenkomponente säubern und ihre Funktionalität bzw. Effizienz wieder verbessern. Somit kann zu einem langlebigen Betrieb der Brennstoffzelleneinheit und zu einem zuverlässigen Betrieb eines entsprechenden Schienenfahrzeugs beigetragen werden. Ein solcher Reinigungsprozess mit Druckluft erfolgt zum Beispiel nach Ablauf eines vorgegebenen Zeitintervalls und/oder auf Basis eines Sensormesssignals, welches im Vergleich mit einem vorgegebenen Schwellenwert Auskunft über den Zustand der Brennstoffzellenkomponente ermöglicht.

Die Druckluft bzw. der komprimierte Luftstrom kann insbesondere von einer üblicherweise vorhandenen Hauptluftleitung entnommen werden, die in einem Schienenfahrzeug zur Druckluftversorgung von Luftmassenstromverbrauchern vorgesehen ist.

Schienenfahrzeuge, wie Lokomotiven, Waggons, Triebzüge, Straßen- oder Untergrundbahnen, benötigen eine zuverlässige Druckluftversorgung für verschiedene Luftmasseverbraucher, wie zum Beispiel eine Bremsanlage, eine Luftfederung und eine WC-Anlage. Eine solche Druckluftversorgung ist zum Beispiel durch einen Kompressor generiert und wird in die Hauptluftleitung des Schienenfahrzeugs eingespeist. Die in der Hauptluftleitung bereitgestellte komprimierte Druckluft kann aus dieser abgeleitet und einem strömungstechnisch angeschlossenen Verbraucher als komprimierter Luftstrom zugeführt werden. Alternativ ist das beschriebene Verfahren auch mit einem anderen Gasstrom durchführbar. Anders formuliert umfasst der Begriff "Luftstrom" allgemein einen Gasstrom und ist nicht zwangsläufig auf Luft beschränkt. Entsprechendes gilt analog in Bezug auf den Begriff "Druckluft", welcher auch als ein unter Druck stehendes Gas bezeichnet werden kann.

Gemäß einer bevorzugten Weiterbildung des Verfahrens umfasst das Bereitstellen einer Variablen ein Vorgeben eines Zeitschwellenwertes. Das Verfahren umfasst weiter ein Zuführen des komprimierten Luftstroms durch die Zuluftleitung in die Brennstoffzellenkomponente der Brennstoffzelleneinheit und dadurch Reinigen der Brennstoffzellenkomponente mittels des komprimierten Luftstroms, wenn der Zeitschwellenwert überschritten ist.

Erfindungsgemäß umfasst das Bereitstellen einer Variablen ein Erfassen eines Messsignals eines Sensors, das repräsentativ ist für eine betriebsrelevante Eigenschaft einer Prozessluft in einer Brennstoffzellenkomponente der Brennstoffzelleneinheit. Das Bereitstellen einer Variablen umfasst weiter ein Ermitteln eines Wertes für die betriebsrelevante Eigenschaft der Prozessluft in der Brennstoffzellenkomponente in Abhängigkeit von dem erfassten Messsignal und ein Abgleichen des ermittelten Wertes mit einem vorgegebenen Schwellenwert für die betriebsrelevante Eigenschaft der Prozessluft. Das Verfahren umfasst weiter ein Zuführen des komprimierten Luftstroms durch eine Zuluftleitung in die Brennstoffzellenkomponente der Brennstoffzelleneinheit in Abhängigkeit von dem Abgleichen des ermittelten Wertes mit dem vorgegebenen Schwellenwert für die betriebsrelevante Eigenschaft der Prozessluft. Dadurch erfolgt ein Reinigen der Brennstoffzellenkomponente mittels des komprimierten Luftstroms.

Erfindungsgemäß ist die Brennstoffzellenkomponente als Befeuchtungseinheit zum Befeuchten einer Prozessluft für die Brennstoffzelleneinheit ausgebildet. Die Prozessluft bezeichnet dabei die Luft, die der Brennstoffzelleneinheit zur Energieumwandlung zugeführt wird.

Eine Befeuchtungseinheit ist insbesondere bei Brennstoffzelleneinheiten erforderlich, die eine gewisse Luftfeuchtigkeit in der zu verarbeitenden Prozessluft benötigen. Dies betrifft zum Beispiel eine Brennstoffzelle mit einer Polymer-Elektrolyt-Membran (PEM) zum Antrieb einer Regionalzugplattform. Die PEM-Technik bietet aufgrund ihrer niedriger Betriebstemperaturen (< 100 °C) vielseitige Anwendungsmöglichkeiten, sodass sie sowohl in relativ kleinen als auch in relativ großen Leistungsbereichen verwendet werden kann. In größeren PEM-Brennstoffzellen, die stärkere Ströme transportieren, erfordert die Polymer-Elektrolyt-Membran gegebenenfalls eine Befeuchtung des Reaktanten, um zu vermeiden, dass dieser unter Belastung dehydriert.

Eine Kapazität zum Protonenaustausch bei einem Energieumwandlungsprozess der Brennstoffzellen ist dabei direkt proportional zur Feuchtigkeit des Polymers der Polymer-Elektrolyt-Membran. Ein trockenes Polymer schränkt die Leitfähigkeit der Polymer-Elektrolyt-Membran ein und verursacht Verluste in der Brennstoffzelle. Für einen effizienten Betrieb einer solchen Brennstoffzelleneinheit, sind deshalb Befeuchter oder Befeuchtungseinheiten vorgesehen, welche gegenwärtig durch kurze und feste Tauschintervalle der Befeuchter, hohe Instandhaltungskosten der Brennstoffzelleneinheit verursachen. Bisherige Instandhaltungskonzepte sehen lediglich einen regelmäßigen, zustandsunabhängigen Tausch eines Befeuchters vor.

Mittels des beschriebenen Verfahrens können eine Streckung eines Tauschintervalls der Befeuchtungseinheit erreicht und somit die Instandhaltungskosten gesenkt werden. Die zeitbedingte oder betriebsbedingte Reinigung der Befeuchtungseinheit trägt somit zu einer längeren Betriebslebensdauer der Befeuchtungseinheit bei und ermöglicht zudem, die Funktionalität einer verschmutzten Befeuchtungseinheit wieder zu verbessern. Zum Beispiel ist ein Zeitschwellenwert von 6 Wochen vorgegeben, sodass nach Ablauf eines Betriebszeitraums der Brennstoffzelleneinheit von 6 Wochen automatisch eine Druckluftspülung der Befeuchtungseinheit durchgeführt wird. Alternativ sind auch andere Zeitintervalle, wie etwa alle 4 Wochen oder nach 450 Betriebsstunden, für ein Durchführen eines solchen Reinigungsprozesses möglich.

Eine Länge des Zeitintervalls für die zeitbedingte Reinigung kann dabei anhand eines Beladungsmodells bestimmt werden. Ein solches Beladungsmodell kann beispielsweise abhängig von Kenntnissen über die Betriebsumgebung des Schienenfahrzeugs, insbesondere abhängig von bekannten Konzentrationen bestimmter Schadgase und Partikel in der Umgebungsluft der Strecke, auf welcher das Schienenfahrzeug eingesetzt wird bzw. eingesetzt werden soll, definiert werden. Durch Abschätzung der Beladung der Membran der Befeuchtungseinheit mit diesen Stoffen kann die Funktion der Befeuchtungseinheit über die Zeit ermittelt werden, sodass ein entsprechendes Zeitintervall definiert werden kann, nach Ablauf dessen eine Reinigung der Befeuchtungseinheit erfolgen soll, um die Funktion der Befeuchtungseinheit zu gewährleisten. Alternativ oder ergänzend können diese Abschätzungen durch praktische Messungen insbesondere unter Einsatz eines Feuchtesensors bestätigt bzw. korrigiert werden. Vorteilhaft kann durch Verwendung eines Beladungsmodells zur Bestimmung eines geeigneten Zeitintervalls von einem Einsatz eines Feuchtesensors während des Betriebs des Schienenfahrzeugs abgesehen werden.

Betriebsbedingt kann ein Feuchtesensor oder ein Feuchtigkeitssensor ein Absinken einer Luftfeuchtigkeit strömungstechnisch nachfolgend zu der Befeuchtungseinheit feststellen. Im Abgleich mit einem vorgegebenen Luftfeuchtigkeitsschwellenwert kann dann ein Druckluftspülen eingeleitet werden. Alternativ oder zusätzlich kann ein Feuchtigkeitssensor strömungstechnisch vor der Befeuchtungseinheit vorgesehen sein und einen Luftfeuchtigkeitsvergleich der Prozessluft vor und hinter der Befeuchtungseinheit ermöglichen.

Ist die Brennstoffzellenkomponente als Befeuchtungseinheit ausgebildet, so sind die betriebsrelevante Eigenschaft als Luftfeuchtigkeit der Prozessluft in der Befeuchtungseinheit und ein vorhandener Sensor als Feuchtesensor zum Erfassen der Luftfeuchtigkeit der Prozessluft in der Befeuchtungseinheit ausgebildet.

Das Verfahren umfasst gemäß einer solchen Weiterbildung ein Erfassen einer Luftfeuchtigkeit der Prozessluft für die Brennstoffzelleneinheit in der Befeuchtungseinheit und ein Abgleichen der erfassten Luftfeuchtigkeit mit einem vorgegebenen Schwellenwert für die Luftfeuchtigkeit der Prozessluft in der Befeuchtungseinheit. Das Verfahren umfasst weiter ein Zuführen des komprimierten Luftstroms durch die Zuluftleitung in die Befeuchtungseinheit, wenn die erfasste Luftfeuchtigkeit den vorgegebenen Schwellenwert für die Luftfeuchtigkeit unterschreitet.

In einer Ausführungsform weist die Befeuchtungseinheit eine Membran und zwei Feuchtesensoren auf. Ein Feuchtesensor ist in der Befeuchtungseinheit in der Membran und ein weiterer Feuchtesensor ist in der Befeuchtungseinheit strömungstechnisch nachfolgend zu der Membran angeordnet. Das Verfahren umfasst gemäß einer solchen Ausführungsform ein Erfassen einer ersten Luftfeuchtigkeit der Prozessluft in der Membran der Befeuchtungseinheit mittels des Feuchtesensors und ein Erfassen einer zweiten Luftfeuchtigkeit der Prozessluft strömungstechnisch hinter der Membran der Befeuchtungseinheit mittels des weiteren Feuchtesensors. Das Verfahren umfasst weiter ein Abgleichen der erfassten ersten und zweiten Luftfeuchtigkeit der Prozessluft miteinander und ein Zuführen des komprimierten Luftstroms durch die Zuluftleitung in die Befeuchtungseinheit in Abhängigkeit von dem Abgleich der erfassten ersten und zweiten Luftfeuchtigkeit.

Es ist eine Erkenntnis im Zusammenhang mit der vorliegenden Erfindung, dass ein limitierender technischer Einflussfaktor auf ein Tauschintervall einer Befeuchtungseinheit von zum Beispiel 7000 Betriebsstunden eine in der in der Befeuchtungseinheit eingesetzte Membran ist. Die Membran in der Befeuchtungseinheit setzt sich zum Beispiel zu, weil Prozessluft nach Durchströmen der Brennstoffzellen, wieder zurück in die Befeuchtungseinheit geleitet wird. Das Tauschintervall kann getreckt werden, indem die Nutzungsdauer der eingesetzten Membran verlängert wird. Mittels des beschriebenen Verfahrens kann die Nutzungsdauer durch das Durchspülen mit Druckluft verlängert werden. Die dadurch entstehenden Reinigungseffekte während des Durchspülens verzögern das Zusetzen und Verschmutzen einer solchen Membran.

Der Reinigungsprozess kann ein Durchspülen der Brennstoffzellenkomponente mit unterschiedlichen Drücken und Volumenströmen des komprimierten Luftstroms umfassen. Der Reinigungsprozess kann ferner ein Durchspülen mit Druckluft umfassen, das einem vorgegebenen Druckverlauf folgt. Beispielweise erfolgt anfänglich ein Zuführen des komprimierten Luftstroms mit eine Druck von 1,0-1,5 bar und wird dann kurzzeitig erhöht bis auf 2 bar. Auch ein gepulstes Durchspülen der Brennstoffzellenkomponente mit einer komprimierten Luftströmung ist möglich.

Gemäß einem weiteren Aspekt weist eine Vorrichtung zum Betreiben einer Brennstoffzelleneinheit für ein Schienenfahrzeug eine Zuluftleitung zum Führen eines komprimierten Luftstroms auf, die strömungstechnisch mit einer Hauptluftleitung zum Führen von Druckluft und zur Versorgung von Luftmassenstromverbraucher des Schienenfahrzeugs koppelbar ist. Die Vorrichtung weist ferner eine Brennstoffzellenkomponente zum Behandeln von Prozessluft für die Brennstoffzelleneinheit, die strömungstechnisch mit der Zuluftleitung gekoppelt ist, sodass der komprimierte Luftstrom durch die Zuluftleitung in die Brennstoffzellenkomponente einleitbar und dadurch ein Reinigen der Brennstoffzellenkomponente durchführbar ist.

Erfindungsgemäß weist die Vorrichtung zumindest einen Sensor auf, der mit der Brennstoffzellenkomponente gekoppelt ist und der dazu eingerichtet ist, ein Messsignal zu erfassen, das repräsentativ für eine betriebsrelevante Eigenschaft einer Prozessluft in der Brennstoffzellenkomponente ist.

Der zumindest eine Sensor ist als Feuchtesensor ausgestaltet und dazu eingerichtet, eine Luftfeuchtigkeit der Prozessluft in einer Befeuchtungseinheit zu erfassen. Die Befeuchtungseinheit realisiert eine Brennstoffzellenkomponente zum Befeuchten der Prozessluft für die Brennstoffzelleneinheit.

Die Vorrichtung umfasst gemäß einer bevorzugten Weiterbildung einen Druckluftspeicher zur Aufnahme und Abgabe von komprimierter Luft, der strömungstechnisch mit der Zuluftleitung gekoppelt ist und der den komprimierten Luftstrom zum Reinigen der Brennstoffzellenkomponente bereitstellt.

Außerdem kann die Vorrichtung eine pneumatische Einheit zum Regeln des Luftstroms durch die Zuluftleitung aufweisen, die strömungstechnisch vor der Brennstoffzellenkomponente angeordnet ist. Die pneumatische Einheit umfasst zum Beispiel ein Ventil oder eine Drossel, die in der Zuluftleitung angeordnet ist und die einen Durchfluss des komprimierten Luftstroms regelt. Zum Beispiel ist die Zuluftleitung mit einer Hauptluftleitung eines Schienenfahrzeugs gekoppelt, in welcher eine komprimierte Druckluft mit einem Druck von etwa 10 bar bereitgestellt ist. In der Zuluftleitung wird mittels des Druckluftspeichers und/oder mittels der pneumatischen Einheit der Luftdruck auf wenige bar, beispielsweise 2 bar, runtergeregelt und für einen Reinigungsprozess der Brennstoffzellenkomponente zugeführt.

Das zuvor beschriebene Verfahren ist insbesondere mittels einer Ausgestaltung der Vorrichtung durchführbar, welche in Form einer Abzweigung von der Hauptluftleitung ein Zwischenreinigungssystem realisiert, das mit einem komprimierten Luftstrom ein Reinigen der Brennstoffzellenkomponente ermöglicht. Dadurch, dass die Vorrichtung einen Reinigungsprozess gemäß einer Ausführungsform des zuvor beschriebenen Verfahrens ermöglicht, sind beschriebene Eigenschaften und Merkmale des Verfahrens auch für die Vorrichtung offenbart und umgekehrt.

Gemäß einem weiteren Aspekt umfasst ein Schienenfahrzeug eine Hauptluftleitung zum Führen von Druckluft und zur Versorgung von Luftmassenstromverbraucher des Schienenfahrzeugs und eine Brennstoffzelleneinheit zum Bereitstellen von Antriebsenergie für das Schienenfahrzeug. Das Schienenfahrzeug weist weiter eine Ausgestaltung der zuvor beschriebenen Vorrichtung zum Betreiben der Brennstoffzelleneinheit auf, die einen Reinigungsprozess einer Brennstoffzellenkomponente der Brennstoffzelleneinheit ermöglicht. Dabei sind die Zuluftleitung strömungstechnisch mit der Hauptluftleitung und die Brennstoffzellenkomponente strömungstechnisch mit der Brennstoffzelleneinheit gekoppelt. Das Schienenfahrzeug realisiert zum Beispiel einen Antriebszug, welcher sich der Vorrichtung zum Reinigen einer Befeuchtungseinheit bedient.

Dadurch, dass das Schienenfahrzeug eine Ausgestaltung der zuvor beschriebenen Vorrichtung umfasst, sind beschriebene Eigenschaften und Merkmale der Vorrichtung auch für das Schienenfahrzeug offenbart und umgekehrt.

Durch die Verwendung von Druckluft zur Zwischenreinigung der Befeuchtungseinheit kann diese länger im Betrieb genutzt werden. Auf das Subsystem der Brennstoffzelle bezogen ist der präventive Tausch eines Befeuchters in der Instandhaltung ein relativ hoher Kostentreiber. Mittels des beschriebenen Verfahrens, der beschriebenen Vorrichtung und des beschriebenen Schienenfahrzeugs können Wartungs- oder Austauschkosten eingespart werden.

Das mittels der Vorrichtung realisierbare Druckluft-Zwischenreinigungssystem nutzt insbesondere die bereits an dem Schienenfahrzeug befindliche Druckluft. Alternativ kann auch separat Druckluft für den Reinigungsprozess bereitgestellt werden. Ein zentraler Kompressor des Schienenfahrzeugs stellt Druckluft für verschiedene Luftmassenverbraucher, wie eine Bremsanlage, eine Luftfederung und eine WC - Anlage, bereit. Die Nutzung der komprimierten Druckluft als bereits vorhandene Ressource ist vorteilhaft, weil diese vorgereinigt ist und ein zusätzliches Filtersystem entfallen kann. Die Druckluft muss nicht durch eine zusätzliche Komponente erzeugt werden, weil die Druckluft aus der Hauptleitung entnommen wird.

Die entnommene Luft strömt durch eine Zuluftleitung in Richtung eines Druckbehälters zur Speicherung. Der Druckbehälter ist über ein Steuersystem, pneumatischen Einheiten, wie Ventilen, Drosseln usw., und einem Schlauch mit der Befeuchtungseinheit strömungstechnisch verbunden.

Weist die Vorrichtung eine Befeuchtungseinheit und einen Feuchtesensor auf, ist dieser in der Membran der Befeuchtungseinheit angeordnet und misst die Luftfeuchtigkeit der Prozessluft. Durch das Zusetzen der Membran mit Verlauf der Betriebszeit sinkt die Feuchtigkeit. Ab einem definierten Grenzwert, welcher den vorgegebenen Schwellenwert für die Luftfeuchtigkeit repräsentiert, erfolgt basierend auf dem Messsignal des Feuchtesensors ein Signal an die Steuerung des Druckbehälters. Daraufhin wird ein Durchströmen der Membran mit der gespeicherten Druckluft ausgelöst.

Somit können nicht nur die Kosten an zu wechselnden Befeuchtungseinheiten über einen Lebenszyklus von zum Beispiel 30 Jahren eingespart werden, sondern auch der vorzuhaltende Ersatzteilvorrat an Befeuchtungseinheiten in einem Lager gering gehalten werden.

Durch die regelmäßige Zwischenreinigung der Membran der Befeuchtungseinheit mittels Druckluft können voraussichtlich die Betriebsstunden der Befeuchtungseinheit bis zu einem Austausch verdoppelt werden. Zum Beispiel werden drei Befeuchtungseinheiten für eine Brennstoffzelleneinheit verbaut, sodass entsprechend hohe Instandhaltungskosten eingespart werden können.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert. Es zeigen:
- Figur 1: eine schematische Darstellung eines Schienenfahrzeugs mit einer Brennstoffzelleneinheit, und
- Figur 2: ein schematisches Ausführungsbeispiel einer Vorrichtung zum Betreiben der Brennstoffzelleneinheit nach Figur 1,
- Figur 3: eine weitere Vorrichtung zum Betreiben der Brennstoffzelleneinheit nach Figur 1, und
- Figur 4: ein Ablaufdiagramm für ein Verfahren zum Betreiben der Brennstoffzelleneinheit nach Figur 1.

Elemente gleicher Konstruktion oder Funktion sind figurenübergreifend mit den gleichen Bezugszeichen gekennzeichnet. Aus Gründen der Übersicht sind gegebenenfalls nicht alle dargestellten Elemente in sämtlichen Figuren mit den zugehörigen Bezugszeichen gekennzeichnet.

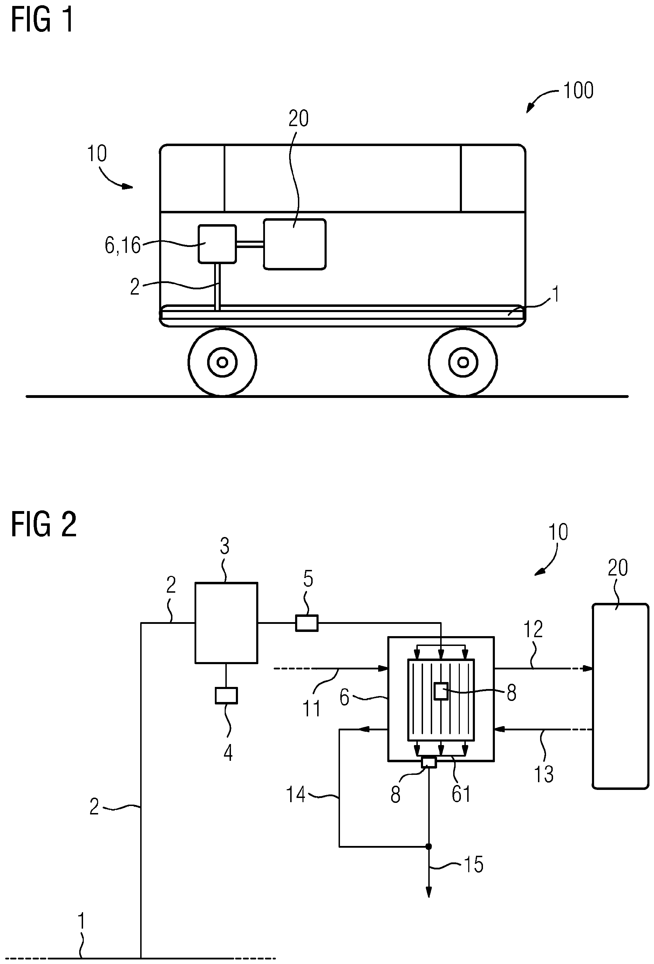

Figur 1 zeigt in einer schematischen Darstellung ein Schienenfahrzeug 100 mit einer Vorrichtung 10, die zum Betreiben einer Brennstoffzelleneinheit 20 des Schienenfahrzeugs 100 ausgebildet ist. Die Brennstoffzelleneinheit 20 ist insbesondere dazu ausgebildet, auf Basis eines chemischen Umwandlungsprozesses Antriebsenergie für das Schienenfahrzeug 100 bereitzustellen.

Das Schienenfahrzeug 100 weist eine Hauptluftleitung 1 auf, die zum Versorgen von angeschlossenen Luftmassenstromverbrauchern komprimierter Druckluft bereitstellt. Die Luftmassestromverbraucher sind beispielsweise ein Bremssystem, ein Türmechanismus, eine WC-Anlage oder eine Luftfederung des Schienenfahrzeugs 100, welche mittels Druckluft betrieben werden. Wie nachfolgend beschrieben wird, realisiert die Vorrichtung 10 ein Druckluftreinigungssystem und stellt einen weiteren Luftmassenstromverbraucher dar, der sich der Druckluft aus der Hauptluftleitung 1 bedient. Die Vorrichtung 10 ermöglicht ein Durchspülen und Reinigen einer Brennstoffzellenkomponente 6, 16 und trägt somit zu einem effizienten und kostengünstigen Betrieb der Brennstoffzelleneinheit 20 und des Schienenfahrzeugs 100 bei.

Figur 2 zeigt in einer schematischen Ansicht ein Ausführungsbeispiel der Vorrichtung 10, die eine Zuluftleitung 2 aufweist, die strömungstechnisch mit der Hauptluftleitung 1 des Schienenfahrzeugs 100 gekoppelt ist. Die Druckluft in der Hauptleitung 1 ist zum Beispiel durch einen zentralen Kompressor des Schienenfahrzeugs 100 bereitgestellt und vorgereinigt.

Die aus der Hauptleitung 1 entnommene Druckluft strömt als komprimierter Luftstrom durch die Zuluftleitung 2 in Richtung eines Druckluftbehälters oder Druckluftspeichers 3 zur Speicherung. Der Druckluftspeicher 3 ist mit einer Steuereinheit 4 gekoppelt, welche einen Luftstrom durch die Zuluftleitung 2 kontrolliert. Ferner ist eine oder mehrere pneumatischen Einheiten 5 mit der Zuluftleitung 2 gekoppelt, die zum Beispiel ein Ventil oder eine Drossel umfassen und einen Luftstrom durch die Zuluftleitung 2 regeln. Die Zuluftleitung 2 ist weiter mit einer Brennstoffzellenkomponente strömungstechnisch verbunden, die gemäß dem in Figur 2 dargestellten Ausführungsbeispiel als Befeuchtungseinheit 6 realisiert ist.

Die Befeuchtungseinheit 6 weist eine Membran 61 auf. Die Membran ist in Figur 2 als rechteckiges Element mit vertikalen Linien angedeutet. Zusätzlich sind zwei Feuchtesensoren 8 angeordnet, die dazu eingerichtet sind eine Luftfeuchtigkeit als betriebsrelevante Eigenschaft einer Prozessluft zu messen. Die Prozessluft wird der Brennstoffzelleneinheit für den Energieumwandlungsprozess zugeführt. Ein Feuchtesensor 8 ist in der Membran 61 und der andere Feuchtesensor 8 ist strömungstechnisch nachfolgend zu der Membran 61 angeordnet.

Mit Verlauf der Betriebszeit setzt sich die Membran 61 zu, sodass strömungstechnisch nachfolgend zu der Membran 61 die Luftfeuchtigkeit in der Prozessluft abnimmt. Ab Unterschreiten eines definierten Schwellenwerts für die Luftfeuchtigkeit in der Prozessluft erfolgt basierend auf dem Messsignal des oder der Feuchtesensoren 8 ein Signal an die Steuerungseinheit 4 des Druckluftspeichers 3. Daraufhin wird ein komprimierter Luftstrom aus dem Druckluftspeicher 3 entlassen und mittels der pneumatischen Einheit 5 kontrolliert der Befeuchtungseinheit 6 zugeführt. Somit erfolgt ein gezieltes Durchströmen und Reinigen der Membran 61 mit der gespeicherten Druckluft.

Auf diese Weise können die Kosten für einen Wechsel der Befeuchtungseinheit 6 verzögert und die zuverlässige Funktionsdauer der Befeuchtungseinheit 6 verlängert werden. Durch die regelmäßige Zwischenreinigung der Membran 61 der Befeuchtungseinheit 6 mittels Druckluft können voraussichtlich die Betriebsstunden der Befeuchtungseinheit 6 bis zu einem Austausch verdoppelt werden. Zum Beispiel werden drei Befeuchtungseinheiten 6 für eine Brennstoffzelleneinheit 20 verbaut, sodass entsprechend hohe Instandhaltungskosten eingespart werden können.

Darüber hinaus sind weitere strömungstechnische Kopplungen 11-15 angedeutet. Unter anderem ist eine Kopplung 11 für die Prozessluft illustriert, die von einem Kompressor des Brennstoffzellensystems bereitgestellt und der Befeuchtungseinheit 6 zugeführt wird. Außerdem ist eine Kopplung für die Prozessluft illustriert, die nach einem Durchtritt durch die Befeuchtungseinheit 6 der Brennstoffzelleneinheit 20 zugeführt wird. Die Kopplung 13 illustriert die von der Brennstoffzelleneinheit 20 rückgeführte Prozessluft, die für eine weitere Befeuchtung der Befeuchtungseinheit 6 zugeführt wird. Die Kopplung 15 repräsentiert einen Ausgang für eine Abluft der Prozessluft und/oder des komprimiertes Luftstroms. Die Kopplung 14 realisiert einen weiteren Ausgang für die Prozessluft und/oder den komprimierte Luftstrom aus der Befeuchtungseinheit 6 in Richtung des Abluftkanals 15.

Die Vorrichtung 10 realisiert somit ein Reinigungssystem für eine Brennstoffzellenkomponente 6, 16 und verbindet strömungstechnisch die Hauptluftleitung 1 des Schienenfahrzeugs 100 mit dem Kreislauf des Brennstoffzellensystems, welches die Brennstoffzelleneinheit 20 umfasst.

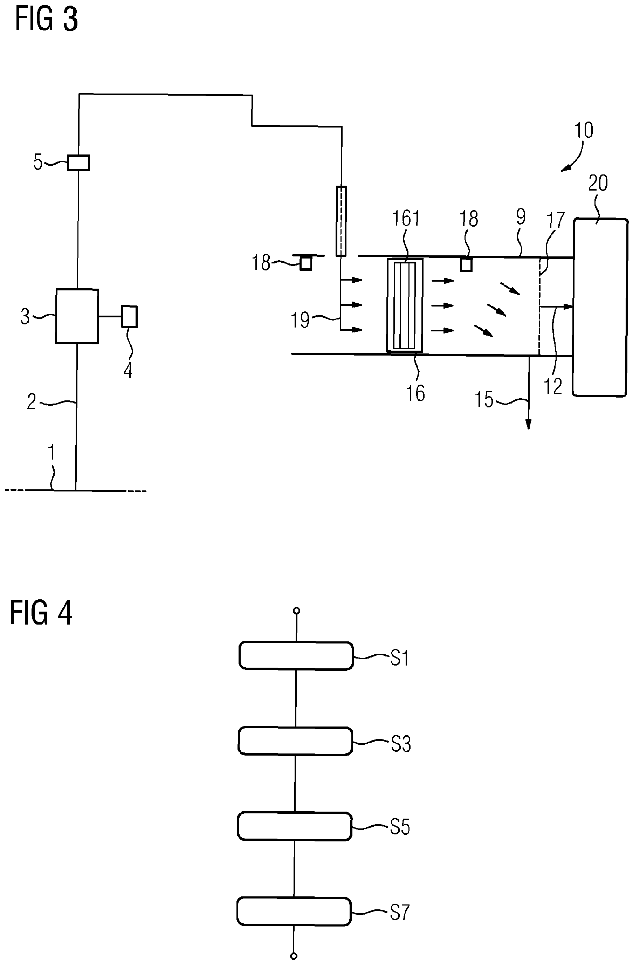

Figur 3 zeigt in einer schematischen Ansicht eine weitere Vorrichtung 10, welche nicht Gegenstand der Erfindung ist. Die Vorrichtung ermöglicht einen Reinigungsprozess für eine Brennstoffzellenkomponente in Ausführung einer Filtereinheit 16. Die Filtereinheit 16 ist in einem Strömungskanal 9 angeordnet und umfasst zum Beispiel ein mehrschichtiges Partikelfiltersystem 161, welches sich mit dem Verlauf der Betriebszeit verschmutzt und zusetzt. Die Vorrichtung 10 weist zwei Drucksensoren 18 auf, von denen einer strömungstechnisch vor und der andere strömungstechnisch hinter dem Partikelfiltersystem 161 angeordnet ist. Die Drucksensoren 18 sind dazu eingerichtet, einen Luftdruck als betriebsrelevante Größe der Prozessluft in der Filtereinheit 16 zu messen. Mittels Luftdruckkontrolle auf Basis von Messsignalen des oder der Drucksensoren 8, kann eine Zwischenreinigung der Filtereinheit 16 mit Druckluft eingeleitet werden. Alternativ oder zusätzlich kann ein Reinigungsprozess auch nach Ablauf eines vorgegebenen Zeitintervalls durchgeführt werden. Diese Reinigungsoption kann auch in dem Ausführungsbeispiel mit der Befeuchtungseinheit 6 gemäß Figur 2 vorgesehen sein.

Nach einem solchen Reinigungsverfahren besitzt die eingesetzte Filtereinheit 16 eine vergleichbare Qualität und Reinheit wie eine fabrikneue Filtereinheit, sodass erhebliche Kosteneinsparungen möglich sind. Für eine nutzbringende Verteilung der in die Filtereinheit 16 einzuleitenden Druckluft kann die Vorrichtung 10 ferner eine ausfahrbare Druckluftteilung 19 aufweisen.

Die Filtereinheit 16 kann auch einem zeitgesteuerten Reinigungsplan unterzogen sein. Dieser sieht zum Beispiel eine wöchentliche Zwischenreinigung vor, um sicherzustellen, dass mit einem gering eingesetzten Luftdruck des zugeführten komprimierten Luftstroms das Partikelfiltersystem 161 beschädigungsfrei gereinigt werden kann. Nach einer definierten Zeit erfolgt durch die Steuereinheit 4 des Druckluftspeichers 3 ein Einleiten des Reinigungsprozesses und es wird ein Durchströmen der Filtereinheit 16 mit der gespeicherten Druckluft ausgelöst.

Bei einem solchen Durchspülvorgang wird zum Beispiel gleichzeitig ein Abluftkanal 15 strömungstechnisch hinter der Filtereinheit 16 mit einer Absperrklappe 17 abgesperrt. Die bei dem Reinigungsvorgang entstehende Abluft wird vorzugsweise über den separaten Abluftkanal 15 der Umgebung zugeführt.

Somit können hohe Instandhaltungskosten eingespart oder reduziert werden, da in der Regel zwei oder mehr Filtereinheiten 16 pro Brennstoffzellensystem verbaut sind.

Figur 4 zeigt ein Ablaufdiagramm für ein Verfahren zum Durchführen eines Reinigungsprozesses der Befeuchtungseinheit 6 bzw. der Filtereinheit 16. In einem Schritt S1 wird Druckluft aus der Hauptleitung 1 entnommen und in dem Druckluftspeicher 3 gespeichert und für einen Reinigungsvorgang bereitgestellt.

In einem Schritt S3 wird zum Beispiel das Ablaufen eines Time Guts ermittelt. Alternativ oder zusätzlich wird mittels der Feuchtesensoren 8 bzw. der Drucksensoren 18 eine Luftfeuchtigkeit bzw. ein Luftdruck in der Prozessluft erfasst.

In einem Schritt S5 wird ermittelt, ob ein vorgegebenes Zeitintervall oder ein vorgegebener Zeitschwellenwert überschritten ist und/oder es wird die ermittelte Luftfeuchtigkeit bzw. der ermittelte Luftdruck mit einem entsprechenden vorgegebenen Schwellenwert verglichen.

In einem Schritt S7 wird gespeicherte Druckluft aus dem Druckluftspeicher 3 kontrolliert entlassen und der Befeuchtungseinheit 6 bzw. der Filtereinheit 16 zur Reinigung ein komprimierter Luftstrom zugeführt, wenn ermittelt wurde, dass der vorgegebene Zeitschwellenwert überschritten ist, und/oder wenn ermittelt wurde, dass die ermittelte Luftfeuchtigkeit bzw. der ermittelte Luftdruck den entsprechenden vorgegebenen Schwellenwert unterschreitet.

## Patentansprüche

1. Verfahren zum Betreiben einer Brennstoffzelleneinheit (20) für ein Schienenfahrzeug (100), umfassend:
- Bereitstellen eines komprimierten Luftstroms (S1),
- Bereitstellen einer Variablen, und
- Zuführen des komprimierten Luftstroms durch eine Zuluftleitung (2) in eine Brennstoffzellenkomponente (6) der Brennstoffzelleneinheit (20) und dadurch Reinigen der Brennstoffzellenkomponente (6) mittels des komprimierten Luftstroms in Abhängigkeit von der Variable,
bei dem das Bereitstellen der Variablen ein Erfassen eines Messsignals zumindest eines Sensors (8), das repräsentativ ist für eine betriebsrelevante Eigenschaft einer Prozessluft in der Brennstoffzellenkomponente (6) der Brennstoffzelleneinheit (20), und ein Ermitteln eines Wertes für die betriebsrelevante Eigenschaft der Prozessluft in der Brennstoffzellenkomponente (6) in Abhängigkeit von dem erfassten Messsignal und ein Abgleichen des ermittelten Wertes mit einem vorgegebenen Schwellenwert für die betriebsrelevante Eigenschaft der Prozessluft umfasst, und bei dem das Zuführen des komprimierten Luftstroms durch die Zuluftleitung (2) in die Brennstoffzellenkomponente (6) der Brennstoffzelleneinheit (20) und dadurch Reinigen der Brennstoffzellenkomponente (6) mittels des komprimierten Luftstroms in Abhängigkeit von dem Abgleichen des ermittelten Wertes mit dem vorgegebenen Schwellenwert für die betriebsrelevante Eigenschaft der Prozessluft durchgeführt wird, und
bei dem die Brennstoffzellenkomponente als Befeuchtungseinheit (6) zum Befeuchten der Prozessluft für die Brennstoffzelleneinheit (20), die betriebsrelevante Eigenschaft als Luftfeuchtigkeit der Prozessluft in der Befeuchtungseinheit (6) und der zumindest eine Sensor als Feuchtesensor (8) zum Erfassen der Luftfeuchtigkeit der Prozessluft in der Befeuchtungseinheit (6) ausgebildet sind, umfassend:
- Erfassen einer Luftfeuchtigkeit der Prozessluft für die Brennstoffzelleneinheit (20) in der Befeuchtungseinheit (6),
- Abgleichen der erfassten Luftfeuchtigkeit mit einem vorgegebenen Schwellenwert für die Luftfeuchtigkeit der Prozessluft in der Befeuchtungseinheit (6), und
- Zuführen des komprimierten Luftstroms durch die Zuluftleitung (2) in die Befeuchtungseinheit (6), wenn die erfasste Luftfeuchtigkeit den vorgegebenen Schwellenwert für die Luftfeuchtigkeit unterschreitet.

2. Verfahren nach Anspruch 1, bei dem das Bereitstellen der Variablen ein Vorgeben eines Zeitschwellenwerts umfasst, und bei dem das Zuführen des komprimierten Luftstroms durch die Zuluftleitung (2) in die Brennstoffzellenkomponente (6) der Brennstoffzelleneinheit (20) und dadurch Reinigen der Brennstoffzellenkomponente (6) mittels des komprimierten Luftstroms durchgeführt wird, wenn der vorgegebene Zeitschwellenwert überschritten ist.

3. Verfahren nach Anspruch 1, bei dem die Befeuchtungseinheit (6) eine Membran (61) aufweist und ein Feuchtesensor (8) in der Befeuchtungseinheit (6) strömungstechnisch vor der Membran (61) und ein weiterer Feuchtesensor (8) in der Befeuchtungseinheit (6) strömungstechnisch hinter der Membran (61) angeordnet sind, umfassend:
- Erfassen einer ersten Luftfeuchtigkeit der Prozessluft strömungstechnisch vor der Membran (61) der Befeuchtungseinheit (6) mittels des Feuchtesensors (8),
- Erfassen einer zweiten Luftfeuchtigkeit der Prozessluft strömungstechnisch hinter der Membran (61) der Befeuchtungseinheit (6) mittels des weiteren Feuchtesensors (8),
- Abgleichen der erfassten ersten und zweiten Luftfeuchtigkeit der Prozessluft miteinander, und
- Zuführen des komprimierten Luftstroms durch die Zuluftleitung (2) in die Befeuchtungseinheit (6) in Abhängigkeit von dem Abgleich der erfassten ersten und zweiten Luftfeuchtigkeit.

4. Verfahren nach einem der Ansprüche 1 bis 3, umfassend:
- Vorgeben eines Zeitschwellenwerts (S5), und
- Zuführen des komprimierten Luftstroms in die Brennstoffzellenkomponente (6) der Brennstoffzelleneinheit (20) und dadurch Reinigen der Brennstoffzellenkomponente (6) mittels des komprimierten Luftstroms in Abhängigkeit von dem vorgegebenen Zeitschwellenwert und dem ermittelten Wert für die betriebsrelevante Eigenschaft der Prozessluft in der Brennstoffzellenkomponente (6).

5. Vorrichtung (10) zum Betreiben einer Brennstoffzelleneinheit (2) für ein Schienenfahrzeug (100), aufweisend:
- eine Zuluftleitung (2) zum Führen eines komprimierten Luftstroms, die strömungstechnisch mit einer Hauptluftleitung (1) zum Führen von Druckluft und zur Versorgung von Luftmassenstromverbrauchern des Schienenfahrzeugs (100) koppelbar ist, und
- eine Brennstoffzellenkomponente (6) zum Behandeln von Prozessluft für die Brennstoffzelleneinheit (20), die strömungstechnisch mit der Zuluftleitung (2) gekoppelt ist, sodass der komprimierte Luftstrom durch die Zuluftleitung (2) in die Brennstoffzellenkomponente (6) einleitbar und dadurch ein Reinigen der Brennstoffzellenkomponente (6) durchführbar ist,
- zumindest einen Sensor (8), der mit der Brennstoffzellenkomponente (6) gekoppelt ist und der dazu eingerichtet ist, ein Messsignal zu erfassen, das repräsentativ für eine betriebsrelevante Eigenschaft einer Prozessluft in der Brennstoffzellenkomponente (6) ist, wobei die Brennstoffzellenkomponente als Befeuchtungseinheit (6) zum Befeuchten der Prozessluft für die Brennstoffzelleneinheit (20) und der zumindest eine Sensor als Feuchtesensor (8) zum Erfassen einer Luftfeuchtigkeit der Prozessluft in der Befeuchtungseinheit (6) als betriebsrelevante Eigenschaft ausgebildet sind,
wobei die Vorrichtung ausgestaltet ist:
einen Wert für die erfasste Luftfeuchtigkeit der Prozessluft mit einem vorgegebenen Schwellenwert für die betriebsrelevante Eigenschaft der Prozessluft abzugleichen, und den komprimierten Luftstrom durch die Zuluftleitung (2) in die Befeuchtungseinheit (6) zuzuführen und dadurch die Befeuchtungseinheit (6) mittels des komprimierten Luftstroms zu reinigen, wenn der Wert für die Luftfeuchtigkeit den vorgegebenen Schwellenwert unterschreitet.

6. Vorrichtung (10) nach Anspruch 5, bei der die Befeuchtungseinheit (6) eine Membran (61) aufweist und ein Feuchtesensor (8) in der Befeuchtungseinheit (6) in der Membran (61) und ein weiterer Feuchtesensor (8) in der Befeuchtungseinheit (6) strömungstechnisch nachfolgend zu der Membran (61) angeordnet sind.

7. Vorrichtung (10) nach Anspruch 5 oder 6, umfassend:
einen Druckluftspeicher (3) zur Aufnahme und Abgabe von komprimierter Luft, der strömungstechnisch mit der Zuluftleitung (2) gekoppelt ist und der den komprimierten Luftstrom zum Reinigen der Brennstoffzellenkomponente (6) bereitstellt.

8. Vorrichtung (10) nach einem der Ansprüche 5 bis 7, umfassend:
eine pneumatische Einheit (5) zum Regeln des Luftstroms durch die Zuluftleitung (2), wobei die pneumatische Einheit strömungstechnisch vor der Brennstoffzellenkomponente (6) angeordnet ist.

9. Schienenfahrzeug (100), umfassend:
- eine Hauptluftleitung (1) zum Führen von Druckluft und zur Versorgung von Luftmassenstromverbrauchern des Schienenfahrzeugs (100),
- eine Brennstoffzelleneinheit (20) zum Bereitstellen von Antriebsenergie für das Schienenfahrzeug (100), und
- eine Vorrichtung (10) nach einem der Ansprüche 5 bis 8 zum Betreiben der Brennstoffzelleneinheit (20), wobei die Zuluftleitung (2) strömungstechnisch mit der Hauptluftleitung (1) und die Brennstoffzellenkomponente (6, 16) strömungstechnisch mit der Brennstoffzelleneinheit (20) gekoppelt sind.

## Claims

1. Method for operating a fuel cell unit (20) for a rail vehicle (100), comprising:
- providing a compressed airflow (S1),
- providing a variable, and
- supplying the compressed airflow through an air supply duct (2) into a fuel cell component (6) of the fuel cell unit (20) and as a result cleaning the fuel cell component (6) by means of the compressed airflow as a function of the variable,
with which the provision of the variable comprises a detection of a measuring signal of at least one sensor (8), which is representative of an operationally relevant property of a process air in the fuel cell component (6) of the fuel cell unit (20), and a determination of a value for the operationally relevant property of the process air in the fuel cell component (6) as a function of the detected measuring signal and a comparison of the determined value with a predetermined threshold value for the operationally relevant property of the process air, and with which the supply of the compressed airflow through the air supply duct (2) into the fuel cell component (6) of the fuel cell unit (20) and as a result cleaning of the fuel cell component (6) by means of the compressed airflow is carried out as a function of the comparison of the determined value with the predetermined threshold value for the operationally relevant property of the process air, and
with which the fuel cell component is embodied as a wetting unit (6) for wetting the process air for the fuel cell unit (20), the operationally relevant property is embodied as an air humidity of the process air in the wetting unit (6) and the at least one sensor is embodied as a humidity sensor (8) for detecting the air humidity of the process air in the wetting unit (6), comprising:
- detecting an air humidity of the process air for the fuel cell unit (20) in the wetting unit (6),
- comparing the detected air humidity with a predetermined threshold value for the air humidity of the process air in the wetting unit (6) and
- supplying the compressed airflow through the air supply duct (2) into the wetting unit (6) when the detected air humidity does not reach the predetermined threshold value for the air humidity.

2. Method according to claim 1, with which the provision of the variables comprises a predetermination of a time threshold value, and with which the supply of the compressed airflow through the air supply duct (2) into the fuel cell component (6) of the fuel cell unit (20) and as a result cleaning of the fuel cell component (6) by means of the compressed airflow is carried out when the predetermined time threshold value is not met.

3. Method according to claim 1, with which the wetting unit (6) has a membrane (61) and a humidity sensor (8) in the wetting unit (6) is arranged upstream of the membrane (61) in terms of flow and a further humidity sensor (8) in the wetting unit (6) is arranged downstream of the membrane (61) in terms of flow, comprising:
- detecting a first air humidity of the process air upstream of the membrane (61) of the wetting unit (6) in terms of flow by means of the humidity sensor (8),
- detecting a second air humidity of the process air downstream of the membrane (6), in terms of flow, of the humidity unit (6) by means of the further humidity sensor (8),
- comparing the detected first and second air humidity of the process air with one another, and
- supplying the compressed airflow through the air supply duct (2) into the wetting unit (6) as a function of the comparison of the detected first and second air humidity.

4. Method according to one of claims 1 to 3, comprising:
- predetermining a time threshold value (S5), and
- supplying the compressed airflow into the fuel cell component (6) of the fuel cell unit (20) and as a result cleaning the fuel cell component (6) by means of the compressed airflow as a function of the predetermined time threshold value and the determined value for the operationally relevant property of the process air in the fuel cell component (6).

5. Device (10) for operating a fuel cell unit (2) for a rail vehicle (100), having:
- an air supply duct (2) for guiding a compressed airflow, which, in terms of flow, can be coupled with a main air duct (1) for guiding compressed air and for supplying air mass flow consumers of the rail vehicle (100), and
- a fuel cell component (6) for treating process air for the fuel cell unit (20), which, in terms of flow, is coupled to the supply air duct (2), so that the compressed airflow can be introduced into the fuel cell component (6) through the air supply duct (2) and as a result cleaning of the fuel cell component (6) can be carried out,
- at least one sensor (8), which is coupled to the fuel cell component (6), and which is designed to detect a measuring signal, which is representative of an operationally relevant property of a process air in the fuel cell component (6), wherein the fuel cell component is embodied as a wetting unit (6) for wetting the process air for the fuel cell unit (20) and the at least one sensor is embodied as a humidity sensor (8) for detecting an air humidity of the process air in the wetting unit (6) as an operationally relevant property,
wherein the device is designed:
to compare a value for the detected air humidity of the process air with a predetermined threshold value for the operationally relevant property of the process air, and to supply the compressed airflow through the air supply duct (2) into the wetting unit (6) and as a result to clean the wetting unit (6) by means of the compressed airflow when the value for the air humidity does not reach the predetermined threshold value.

6. Device (10) according to claim 5, with which the wetting unit (6) has a membrane (61) and a humidity sensor (8) in the wetting unit (6) in the membrane (61) and a further humidity sensor (8) in the wetting unit (6) are arranged downstream of the membrane (61) in terms of flow.

7. Device (10) according to claim 5 or 6, comprising:
a compressed air storage device (3) for receiving and
outputting compressed air, which, in terms of flow, is coupled with the air supply duct (2) and which provides the compressed airflow for cleaning the fuel cell component (6).

8. Device (10) according to one of claims 5 to 7, comprising:
a pneumatic unit (5) for regulating the airflow through the air supply duct (2), wherein the pneumatic unit is arranged upstream of the fuel cell component (6) in terms of flow.

9. Rail vehicle (100), comprising:
- a main air duct (1) for guiding compressed air and for supplying air mass flow consumers of the rail vehicle (100),
- a fuel cell unit (20) for providing drive energy for the rail vehicle (100), and
- a device (10) according to one of claims 5 to 8 for operating the fuel cell unit (20), wherein, in terms of flow, the air supply duct (2) is coupled with the main air duct (1) and the fuel cell component (6, 16) is coupled with the fuel cell unit (20).

## Revendications

1. Procédé pour faire fonctionner une unité (20) de pile à combustible d'un véhicule (100) ferroviaire, dans lequel :
- on se procure un courant (S1) d'air comprimé,
- on se procure une variable, et
- on envoie le courant d'air comprimé, par un conduit (2) d'apport d'air, dans un composant (6) d'une pile à combustible de l'unité (20) de pile à combustible, et on nettoie ainsi le composant (6) de pile à combustible, au moyen du courant d'air comprimé en fonction de la variable,
dans lequel se procurer la variable comprend une détection d'un signal de mesure d'au moins un capteur (8), qui est représentatif d'une propriété, pertinente pour le fonctionnement, d'un air de processus dans le composant (6) de pile à combustible de l'unité (20) de pile à combustible, et une détermination d'une valeur de la propriété, pertinente pour le fonctionnement, de l'air de processus dans le composant (6) de pile à combustible en fonction du signal de mesure détecté et d'une égalisation de la valeur déterminée à une valeur de seuil donnée à l'avance de la propriété, pertinente pour le fonctionnement, de l'air de processus, et dans lequel on effectue l'apport du courant d'air comprimé par le conduit (2) d'apport d'air au composant (6) de pile à combustible de l'unité (20) de pile à combustible et ainsi le nettoyage du composant (6) de pile à combustible, au moyen du courant d'air comprimé, en fonction de l'égalisation de la valeur déterminée à la valeur de seuil donnée à l'avance de la propriété, pertinente pour le fonctionnement, de l'air de processus, et
dans lequel le composant de pile à combustible est constitué sous la forme d'une unité (6) d'humidification pour l'humidification de l'air de processus pour l'unité (20) de pile à combustible, la propriété pertinente pour le fonctionnement est constituée sous la forme d'une humidité de l'air de processus dans l'unité (6) d'humidification et le au moins un capteur (8) sous la forme d'un capteur d'humidité pour la détection de l'humidité de l'air du processus dans l'unité (6) d'humidification, comprenant :
- détection d'une humidité de l'air du processus pour l'unité (20) de pile à combustible dans l'unité (6) d'humidification,
- égalisation de l'humidité de l'air détectée à une valeur de seuil donnée à l'avance de l'humidité de l'air du processus dans l'unité (6) d'humidification, et
- apport du courant d'air comprimé par le conduit (2) d'apport d'air à l'unité (6) d'humidification, si l'humidité de l'air, qui a été détectée, est inférieure à la valeur de seuil donnée à l'avance de l'humidité de l'air.

2. Procédé suivant la revendication 1, dans lequel se procurer la variable comprend une prescription d'une valeur de seuil de temps, et dans lequel on effectue l'apport du courant d'air comprimé par le conduit (2) d'apport d'air au composant (6) de pile à combustible de l'unité (20) de pile à combustible, et ainsi le nettoyage du composant (6) de pile à combustible au moyen du courant d'air comprimé, si la valeur de seuil de temps donnée à l'avance est dépassée.

3. Procédé suivant la revendication 1, dans lequel l'unité (6) d'humidification a une membrane (61) et un capteur (8) d'humidité dans l'unité (6) d'humidification et, en technique des fluides, montée avant la membrane (61), et un autre capteur (8) d'humidité dans l'unité (6) d'humidification est monté, en technique des fluides, derrière la membrane (61) comprenant :
- détection d'une première humidité de l'air de processus, en technique des fluides avant la membrane (61) de l'unité (6) d'humidification, au moyen du capteur (8) d'humidité,
- détection d'une deuxième humidité de l'air de processus, en technique des fluides derrière la membrane (61) de l'unité (6) d'humidification, au moyen de l'autre capteur (8) d'humidité,
- égalisation de la première et de la deuxième humidités détectées de l'air de processus, et
- apport du courant d'air comprimé par le conduit (2) d'apport d'air à l'unité (6) d'humidification, en fonction de l'égalisation des première et deuxième humidités de l'air, qui ont été détectées.

4. Procédé suivant l'une des revendications 1 à 3, comprenant
- prescription d'une valeur (S5) de seuil de temps, et
- apport du courant d'air comprimé au composant (6) de pile à combustible de l'unité (20) de pile à combustible et ainsi nettoyage du composant (6) de pile à combustible, au moyen du courant d'air comprimé, en fonction de la valeur de seuil de temps donnée à l'avance et de la valeur déterminée de la propriété, pertinente pour le fonctionnement, de l'air de processus dans le composant (6) de pile à combustible.

5. Installation (10) pour faire fonctionner une unité (2) de pile à combustible d'un véhicule (100) ferroviaire, comportant :
- un conduit (2) d'apport d'air pour envoyer un courant d'air comprimé, qui, en technique des fluides, peut être relié à un conduit (1) d'air principal pour la conduite d'air comprimé et pour l'alimentation de consommateurs de courant massique d'air du véhicule (100) ferroviaire, et
- un composant (6) de pile à combustible pour le traitement de l'air de processus pour l'unité (20) de pile à combustible, qui est reliée, en technique des fluides, au conduit (2) d'apport d'air de manière à pouvoir introduire le courant d'air comprimé par le conduit (2) d'apport d'air dans le composant (6) de pile à combustible et effectuer ainsi un nettoyage du composant (6) de pile à combustible,
- au moins un capteur (8), qui est relié au composant (6) de pile à combustible et qui est agencé pour détecter un signal de mesure, qui est représentatif d'une propriété, pertinente pour le fonctionnement, d'un air de processus dans le composant (6) de pile à combustible, dans lequel le composant de pile à combustible est constitué sous la forme d'une unité (6) d'humidification pour l'humidification de l'air de processus pour l'unité (20) de pile à combustible, et le au moins un capteur, sous la forme d'un capteur (8) d'humidité pour la détection d'une humidité de l'air de processus dans l'unité (6) d'humidification, comme propriété pertinente pour le fonctionnement,
dans lequel l'installation est conformée :
pour égaliser une valeur de l'humidité détectée de l'air de processus à une valeur de seuil donnée à l'avance de la propriété, pertinente pour le fonctionnement, de l'air du processus, et pour envoyer le courant d'air comprimé par le conduit (2) d'apport d'air dans l'unité (6) d'humidification et nettoyer ainsi l'unité (6) d'humidification, au moyen du courant d'air comprimé, si la valeur de l'humidité de l'air est inférieure à la valeur de seuil donnée à l'avance.

6. Installation (10) suivant la revendication 5, dans laquelle l'unité (6) d'humidification a une membrane (61) et un capteur (8) d'humidité dans l'unité (6) d'humidification est montée, en technique des fluides avant la membrane (61), et un autre capteur (8) d'humidité dans l'unité (6) d'humidification est monté, en technique des fluides derrière la membrane (61).

7. Installation (10) suivant la revendication 5 ou 6, comprenant :
un accumulateur (3) d'air comprimé pour recevoir et céder de l'air comprimé, qui est relié en technique des fluides au conduit (2) d'apport d'air et qui met l'air du courant d'air comprimé à disposition pour le nettoyage du composant (6) de pile à combustible.

8. Installation (10) suivant l'une des revendications 5 à 7, comprenant :
une unité (5) pneumatique, pour le réglage du courant d'air dans le conduit (2) d'apport d'air, dans laquelle l'unité pneumatique est montée, en technique des fluides avant le composant (6) de pile à combustible.

9. Véhicule (100) ferroviaire, comprenant :
- un conduit (1) d'air principal pour conduire de l'air comprimé et pour alimenter des consommateurs de courant massique d'air du véhicule (100) ferroviaire,
- une unité (20) de pile à combustible pour disposer d'énergie d'entraînement du véhicule (100) ferroviaire, et
- une installation (10) suivant l'une des revendications 5 à 8, pour faire fonctionner l'unité (20) de pile à combustible, dans laquelle le conduit (2) d'apport d'air communique, en technique des fluides, avec le conduit (1) d'air principal et le composant (6, 16) de pile à combustible communique, en technique des fluides, avec l'unité (20) de pile à combustible.
